# EUROPÄISCHE PATENTSCHRIFT

(11) **EP 2 619 839 B1**
(45) Veröffentlichungstag und Bekanntmachung des Hinweises auf die Patenterteilung: **28.05.2014**
(21) Anmeldenummer: 11748337.0
(22) Anmeldetag: 10.08.2011
(51) Int. Cl.: H01M 10/44, B60L 11/18, H02J 7/00, H01M 10/48, H02M 1/36, H01M 16/00

(54) **VERFAHREN ZUM EINSTELLEN EINER GLEICHSPANNUNGSZWISCHENKREISSPANNUNG**
METHOD FOR ADJUSTING A DC VOLTAGE INTERMEDIATE-CIRCUIT VOLTAGE
PROCÉDÉ DE RÉGLAGE DE LA TENSION D'UN CIRCUIT INTERMÉDIAIRE DE TENSION CONTINUE

(30) Priorität: 20.09.2010 DE 102010041046
(43) Veröffentlichungstag der Anmeldung: 31.07.2013
(73) Patentinhaber: Samsung SDI Co., Ltd., Gyeonggi-do (KR); Robert Bosch GmbH, 70442 Stuttgart (DE)
(72) Erfinder: FINK, Holger, 70567 Stuttgart (DE)
(74) Vertreter: Bee, Joachim
(86) Internationale Anmeldenummer: PCT/EP2011/063732
(87) Internationale Veröffentlichungsnummer: WO 2012/038149

(56) Entgegenhaltungen:
- EP-A1- 2 061 116
- US-A- 6 140 799
- US-A1- 2008 054 870
- US-A1- 2008 197 810

## Beschreibung

Die vorliegende Erfindung betrifft ein Verfahren zum Einstellen einer Gleichspannungszwischenkreisspannung sowie eine Batterie und ein Batteriesystem mit einem Gleichspannungszwischenkreis, welche ausgebildet sind, das Verfahren auszuführen.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

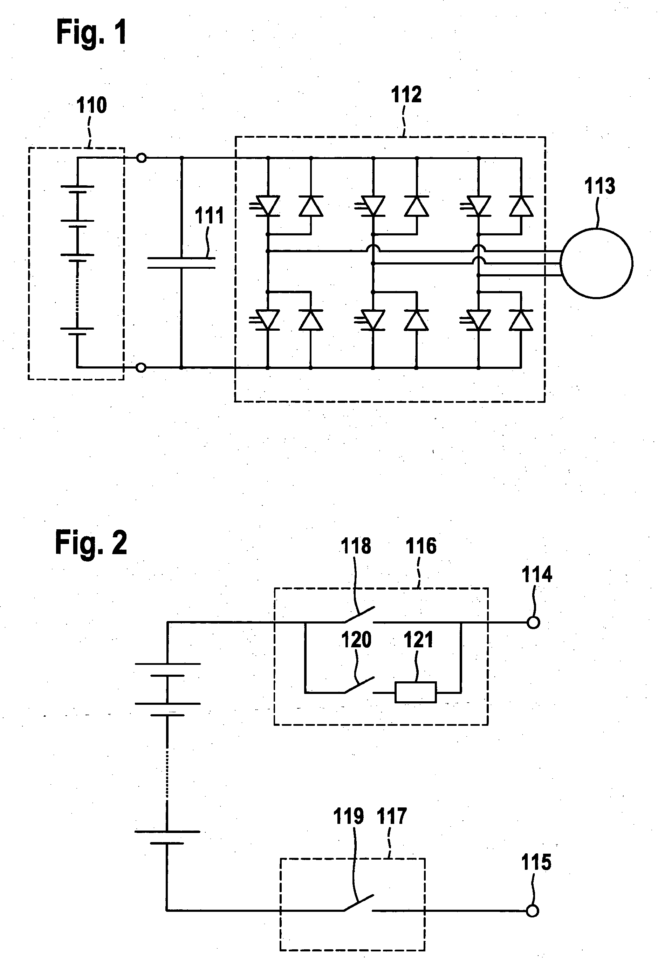

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 110 ist an einen Gleichspannungszwischenkreis angeschlossen, welcher durch einen Kondensator 111 gebildet wird. An den Gleichspannungszwischenkreis angeschlossen ist ein Pulswechselrichter 112, der über jeweils zwei schaltbare Halbleiterventile und zwei Dioden an drei Ausgängen gegeneinander phasenversetzte Sinusspannungen für den Betrieb eines elektrischen Antriebsmotors 113 bereitstellt. Die Kapazität des Kondensators 111, der den Gleichspannungszwischenkreis bildet, muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich bis zu einigen mF.

Figur 2 zeigt die Batterie 110 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 114 ist eine Lade- und Trenneinrichtung 116 geschaltet. Optional kann zusätzlich zwischen den Minuspol der Batteriezellen und ein negatives Batterieterminal 115 eine Trenneinrichtung 117 geschaltet werden. Die Trenn- und Ladeeinrichtung 116 und die Trenneinrichtung 117 umfassen jeweils einen Schütz 118 beziehungsweise 119, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 116 ist zusätzlich ein Ladeschütz 120 mit einem zu dem Ladeschütz 120 in Serie geschalteten Ladewiderstand 121 vorgesehen. Der Ladewiderstand 121 begrenzt einen Aufladestrom für den Kondensator 111, wenn die Batterie an den Gleichspannungszwischenkreis angeschlossen wird. Hierzu wird zunächst das Schütz 118 offen gelassen und nur das Ladeschütz 120 geschlossen. Erreicht die Spannung am positiven Batterieterminal 114 die Spannung der Batteriezellen, kann das Schütz 119 geschlossen und gegebenenfalls das Ladeschütz 120 geöffnet werden.

Das Ladeschütz 120 und der Ladewiderstand 121 stellen in Anwendungen, die eine Leistung im Bereich einiger 10 kW aufweisen, bedeutenden Mehraufwand dar, der lediglich für den einige hundert Millisekunden dauernden Ladevorgang des Gleichspannungszwischenkreises benötigt wird. Die genannten Komponenten sind nicht nur teuer, sondern auch groß und schwer, was besonders für den Einsatz in mobilen Anwendungen wie elektrischen Kraftfahrzeugen störend ist.

Batteriesysteme, die aus mehreren Batteriemodulen bestehen und eine Einstellung der angegebenen Spannung ermöglichen, sind auch aus den Druckschriften EP 2 061 116 A1, US 6,140,799 und US 2008/0054870 A1 bekannt.

### Offenbarung der Erfindung

Erfindungsgemäß wird daher ein Verfahren zum Einstellen einer Spannung eines Gleichspannungszwischenkreises in einem Batteriesystem mit einer Batterie und einem Antriebssystem eingeführt. Die Batterie ist mit dem Antriebssystem über den Gleichspannungszwischenkreis verbunden und weist eine Anzahl von n seriengeschalteten Batteriemodulen auf, von denen jedes eine Koppeleinheit und wenigstens eine zwischen einen ersten Eingang und einen zweiten Eingang der Koppeleinheit geschaltete Batteriezelle umfasst. Die Batteriemodule sind ausgebildet, abhängig von einem Schaltzustand der Koppeleinheit entweder eine Batteriemodulspannung oder eine Spannung von Null auszugeben. Die Anzahl n ist größer als 1. Die Batterie ist ausgebildet, eine wählbare Ausgangsspannung von n+1 verschiedenen Ausgangsspannungen auszugeben. Das Verfahren weist wenigstens die folgenden Schritte auf:
a) Bestimmen eines Istwertes der Spannung des Gleichspannungszwischenkreises;
b) Vergleichen des Istwertes der Spannung des Gleichspannungszwischenkreises mit den verschiedenen Ausgangsspannungen der Batterie;
c) Auswählen einer ersten ausgewählten Ausgangsspannung der Batterie, welche die höchste Spannung derjenigen Ausgangsspannungen der Batterie ist, welche niedriger als der Istwert der Spannung des Gleichspannungszwischenkreises sind;
d) Auswählen einer zweiten ausgewählten Ausgangsspannung der Batterie, welche die niedrigste Spannung derjenigen Ausgangsspannungen der Batterie ist, welche höher als der Istwert der Spannung des Gleichspannungszwischenkreises sind;
e) während einer ersten variablen Zeitspanne Ausgeben der ersten ausgewählten Ausgangsspannung der Batterie;
f) während einer zweiten variablen Zeitspanne Ausgeben der zweiten ausgewählten Ausgangsspannung der Batterie; und
g) Wiederholen der Schritte a) bis f), bis die Spannung des Gleichspannungszwischenkreises eine Sollbetriebsspannung erreicht.

Das Verfahren der Erfindung bietet den Vorteil, dass die Ausgangsspannung der Batterie schnell und kontrolliert zwischen der ersten und der zweiten ausgewählten Ausgangsspannung umgeschaltet wird, wodurch sich im zeitlichen Mittel ein einstellbarer Ladestrom für den Gleichspannungszwischenkreis ergibt. Da der Ladestrom durch Auswahl geeigneter erster und zweiter variabler Zeitspannen auf einen gewünschten Wert eingestellt und somit auch begrenzt werden kann, können das Ladeschütz 120 und der Ladewiderstand 121 der Batteriesysteme des Standes der Technik entfallen, wodurch Kosten, Volumen und Gewicht eines nach dem erfindungsgemäßen Verfahren arbeitenden Batteriesystems entsprechend gesenkt werden können. Indem die Batterie ausgebildet ist, durch Aktivieren oder Deaktivieren der einzelnen seriengeschalteten Batteriemodule unterschiedliche Ausgangsspannungen auszugeben, können zum Einstellen der Spannung des Gleichspannungszwischenkreises die beiden dem Istwert der Spannung am nächsten gelegenen Ausgangsspannungen der Batterie ausgewählt werden, zwischen welchen dann mit geeigneten ersten und zweiten variablen Zeitspannen umgeschaltet wird, um die Spannung des Gleichspannungszwischenkreises wie gewünscht zu beeinflussen. Die Wahl der beiden nächstgelegenen Ausgangsspannungen der Batterie senkt die Welligkeit des Ladestroms, welcher aufgrund unweigerlich vorhandener Induktivitäten und Kapazitäten nur mit einer begrenzten Geschwindigkeit der Änderung der Ausgangsspannung der Batterie folgen kann, auf ein Minimum. Auch die Schaltgeschwindigkeit der Koppeleinheiten der Batteriemodule kann entsprechend gesenkt werden.

Das Verfahren der Erfindung besitzt außerdem den Vorteil, dass der Gleichspannungszwischenkreis in einer kürzeren Zeit aufgeladen wird. In einem Batteriesystem mit der in Figur 2 gezeigten Batterie mit Lade- und Trenneinrichtung 116 wird der Gleichspannungszwischenkreis bis zum Schließen des Schützes 118 mit einer Charakteristik geladen, die einer Exponentialfunktion mit negativem Exponenten entspricht. Dies bedeutet, dass zu Beginn des Aufladevorgangs der maximale Aufladestrom fließt, welcher mit fortschreitender Aufladung des Gleichspannungszwischenkreises jedoch immer weiter abnimmt, so dass sich die Spannung des Gleichspannungszwischenkreises asymptotisch dem Wert der Ausgangsspannung der Batterie nähert. Gemäß dem Verfahren der Erfindung kann die Spannung des Gleichspannungszwischenkreises jedoch linear erhöht werden und so die Kapazität des Gleichspannungszwischenkreises über den gesamten Aufladezeitraum mit einem im Mittel konstanten Strom aufgeladen werden, welcher wenigstens eine ähnliche Größe wie der anfängliche Ladestrom in einem Batteriesystem mit Ladewiderstand 121 aufweist. Dadurch wird die erste Sollbetriebsspannung entsprechend schneller erreicht.

Bevorzugt ist die Sollbetriebsspannung gleich einer maximalen der n+1 verschiedenen Ausgangsspannungen der Batterie. In diesem Fall wird das Verfahren ausgeführt, bis der Gleichspannungszwischenkreis die maximal mögliche Spannung erreicht hat. Anschließend kann das Regelsystem deaktiviert werden, so dass die Spannung des Gleichspannungszwischenkreises direkt an die Ausgangsspannung der Batterie gekoppelt ist.

Vorzugsweise enthält der Schritt des Bestimmens des Istwertes der Spannung des Gleichspannungszwischenkreises einen Schritt des Messens der Spannung des Gleichspannungszwischenkreises. Dadurch können nicht nur Steuer-, sondern auch Regelungsverfahren implementiert werden, bei denen die Regelung abhängig von Messwerten der Zielmessgröße, also der Spannung des Gleichspannungszwischenkreises, durchgeführt wird. Alternativ kann der Istwert der Spannung des Gleichspannungszwischenkreises über eine Zustandsvariable berechnet werden.

Die erste variable Zeitspanne und die zweite variable Zeitspanne werden besonders bevorzugt abhängig von einer Differenz zwischen der Sollbetriebsspannung und dem Istwert der Spannung des Gleichspannungszwischenkreises bestimmt. Der (mittlere) Strom, der sich während der zweiten variablen Zeitspanne einstellt, ist neben dem Verhältnis der ersten variablen Zeitspanne zur zweiten variablen Zeitspanne auch von der Differenz zwischen dem Istwert der Spannung des Gleichspannungszwischenkreises und der Sollbetriebsspannung (gewöhnlich gleich der maximalen Ausgangsspannung der Batterie) abhängig. Um beispielsweise für ein gegebenes Paar von erster und zweiter ausgewählter Ausgangsspannung der Batterie einen über den Aufladevorgang des Gleichspannungszwischenkreises hinweg im Mittel konstanten Ladestrom einzustellen, wird beispielsweise die erste variable Zeitspanne im Verhältnis zur zweiten variablen Zeitspanne verkürzt, je geringer die Differenz ist. Alternativ oder zusätzlich kann natürlich auch die zweite variable Zeitspanne im Verhältnis zur ersten variablen Zeitspanne verlängert werden.

Das Verfahren kann einen zusätzlichen Schritt des Messens eines aktuellen Ladestroms aufweisen. Hierdurch kann ein eingesetztes Regelungsverfahren auch den aktuell fließenden Ladestrom berücksichtigen oder es können Sicherungsmechanismen zum Schutz vor unzulässig hohen Ladeströmen implementiert werden.

Besonders bevorzugt weist das Verfahren daher auch eine zusätzlichen Schritt des Vergleichens des gemessenen aktuellen Ladestroms mit einem maximalen zulässigen Ladestrom auf, wobei die Schritte e) und/oder f) beendet wird, wenn der aktuelle Ladestrom größer als der maximal zulässige Ladestrom ist.

In Fortführung der beiden letztgenannten Ausstattungsvarianten kann das Verfahren auch über einen zusätzlichen Schritt des Bestimmens eines mittleren Ladestroms und des Vergleichens des mittleren Ladestroms mit einem Sollladestrom verfügen, wobei die erste variable Zeitspanne verlängert und/oder die zweite variable Zeitspanne verkürzt wird, wenn der mittlere Ladestrom größer als der Sollladestrom ist, und/oder wobei die erste variable Zeitspanne verkürzt und/oder die zweite variable Zeitspanne verlängert wird, wenn der mittlere Ladestrom kleiner als der Sollladestrom ist.

Besonders bevorzugt wird ein Sollladestrom konstant eingestellt, bis die Spannung des Gleichspannungszwischenkreises die Sollbetriebsspannung erreicht. Auf diese Weise wird die Spannung des Gleichspannungszwischenkreises linear steigen und der Gleichspannungskreis in einer möglichst kurzen Zeit aufgeladen, ohne einen maximal zulässigen Ladestrom zu überschreiten.

Ein zweiter Aspekt der Erfindung führt eine Batterie mit einer Steuereinheit und einer Anzahl von n seriengeschalteten Batteriemodulen ein. Jedes Batteriemodul umfasst eine Koppeleinheit und wenigstens eine zwischen einen ersten Eingang und einen zweiten Eingang der Koppeleinheit geschaltete Batteriezelle. Die Batteriemodule sind ausgebildet, abhängig von einem Schaltzustand der Koppeleinheit entweder eine Batteriemodulspannung oder eine Spannung von Null auszugeben. Die Anzahl n der seriengeschalteten Batteriemodule ist größer 1, so dass die Batterie ausgebildet ist, eine wählbare Ausgangsspannung von n+1 verschiedenen Ausgangsspannungen auszugeben. Die Steuereinheit ist erfindungsgemäß dazu ausgebildet, das Verfahren des ersten Erfindungsaspektes durchzuführen.

Besonders bevorzugt sind dabei die Batteriezellen der Batteriemodule Lithium-lonen-Batteriezellen. Lithium-lonen-Batteriezellen besitzen die Vorteile einer hohen Zellspannung und eines hohen Energiegehaltes in einem gegebenen Volumen.

Ein weiterer Erfindungsaspekt betrifft ein Batteriesystem mit einer Batterie, einem mit der Batterie verbundenen Gleichspannungszwischenkreis und einem mit dem Gleichspannungszwischenkreis verbundenen Antriebssystem. Die Batterie ist dabei gemäß dem vorhergehenden Aspekt der Erfindung ausgebildet.

Besonders bevorzugt ist der Gleichspannungszwischenkreis dabei direkt mit der Batterie verbunden, das heißt, es sind keine weiteren Komponenten zwischen der Batterie und dem Gleichspannungszwischenkreis vorgesehen, insbesondere keine Ladevorrichtung beziehungsweise kein Ladeschütz und kein Ladewiderstand. Bei Ausführungsformen des Batteriesystems können jedoch auch weitere Komponenten wie Stromsensoren zwischen die Batterie und den Gleichspannungszwischenkreis geschaltet sein.

Der Gleichspannungszwischenkreis kann einen Kondensator aufweisen oder aus einem Kondensator bestehen.

Das Batteriesystem kann beispielsweise in einem Kraftfahrzeug verwirklicht sein, wobei das Antriebssystem einen elektrischen Antriebsmotor zum Antreiben des Kraftfahrzeuges sowie einen Pulswechselrichter umfasst.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in einer Batterie, mit der das erfindungsgemäße Verfahren ausgeführt werden kann,
Figur 4 eine mögliche schaltungstechnische Umsetzung der ersten Ausführungsform der Koppeleinheit,
Figuren 5 und 6 zwei Ausführungsformen eines Batteriemoduls mit der ersten Ausführungsform der Koppeleinheit,
Figur 7 eine zweite Ausführungsform einer Koppeleinheit zum Einsatz in einer Batterie, mit der das erfindungsgemäße Verfahren ausgeführt werden kann,
Figur 8 eine mögliche schaltungstechnische Umsetzung der zweiten Ausführungsform der Koppeleinheit,
Figur 9 eine Ausführungsform eines Batteriemoduls mit der zweiten Ausführungsform der Koppeleinheit,
Figur 10 eine Batterie, mit der das erfindungsgemäße Verfahren ausgeführt werden kann und
Figur 11 ein Blockdiagramm eines beispielhaften Regelsystems gemäß der Erfindung.

### Ausführungsformen der Erfindung

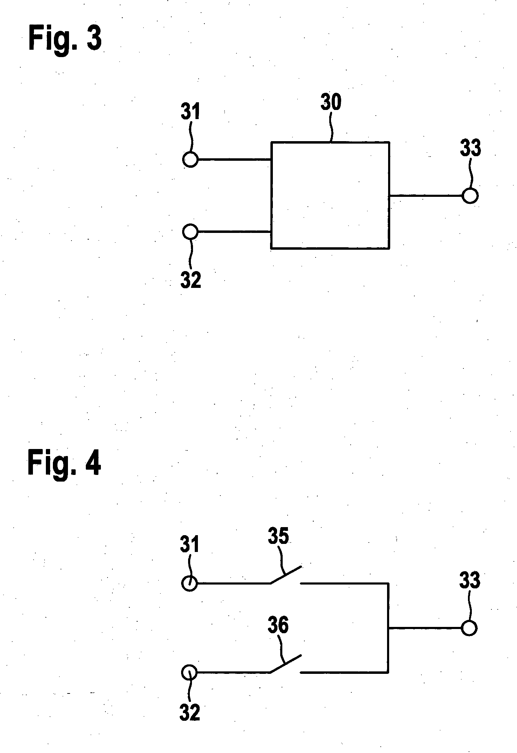

Figur 3 zeigt eine erste Ausführung einer Koppeleinheit 30 zum Einsatz in einer Batterie, mit der das erfindungsgemäße Verfahren ausgeführt werden kann. Die Koppeleinheit 30 besitzt zwei Eingänge 31 und 32 sowie einen Ausgang 33 und ist ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie zum Beispiel MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf ein Steuersignal beziehungsweise eine Änderung des Steuersignales reagieren kann.

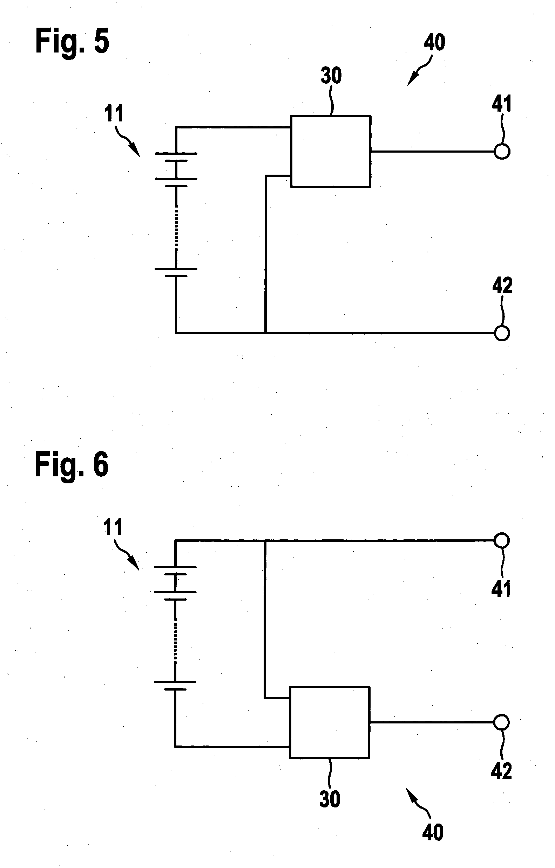

Die Figuren 5 und 6 zeigen zwei Ausführungsformen eines Batteriemoduls 40 mit der ersten Ausführungsform der Koppeleinheit 30. Eine Mehrzahl von Batteriezellen 11 ist zwischen die Eingänge der Koppeleinheit 30 in Serie geschaltet. Die Erfindung ist jedoch nicht auf eine solche Serienschaltung von Batteriezellen 11 beschränkt, es kann auch nur eine einzelne Batteriezelle 11 vorgesehen sein oder aber eine Parallelschaltung oder gemischt-seriell-parallele Schaltung von Batteriezellen 11. Im Beispiel der Figur 5 sind der Ausgang der Koppeleinheit 30 mit einem ersten Terminal 41 und der negative Pol der Batteriezellen 11 mit einem zweiten Terminal 42 verbunden. Es ist jedoch eine beinahe spiegelbildliche Anordnung wie in Figur 6 möglich, bei der der positive Pol der Batteriezellen 11 mit dem ersten Terminal 41 und der Ausgang der Koppeleinheit 30 mit dem zweiten Terminal 42 verbunden sind.

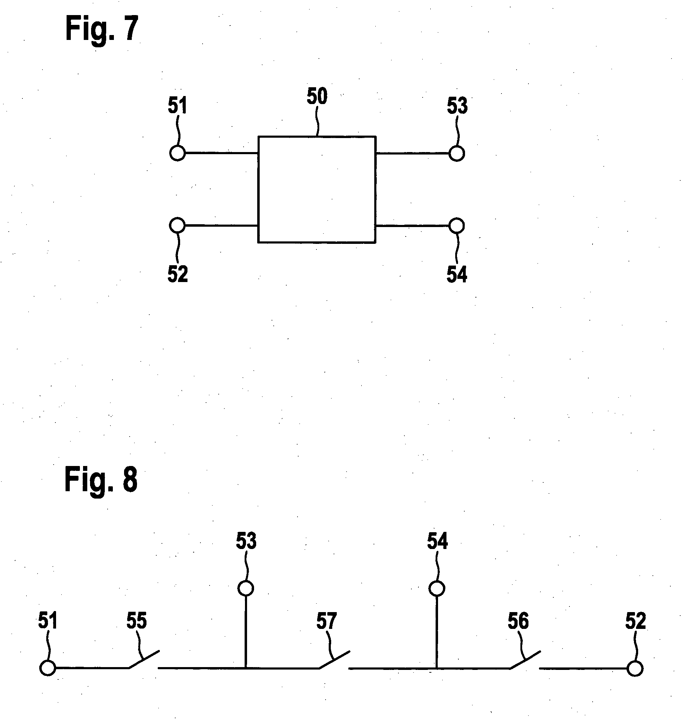

Figur 7 zeigt eine zweite Ausführungsform einer Koppeleinheit 50 zum Einsatz in einer Batterie, mit der das erfindungsgemäße Verfahren ausgeführt werden kann. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 8 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie zum Beispiel MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf ein Steuersignal beziehungsweise eine Änderung des Steuersignales reagieren kann.

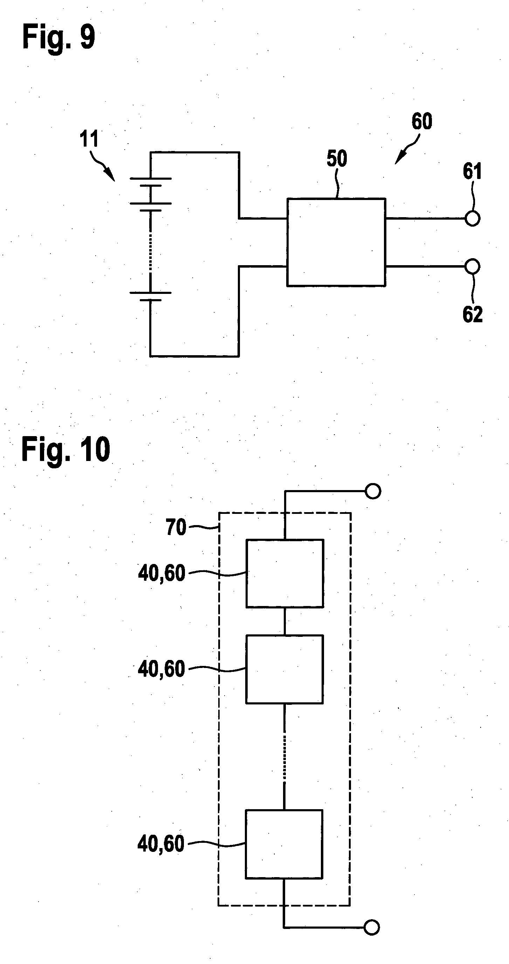

Die Figur 9 zeigt eine Ausführungsform eines Batteriemoduls 60 mit der zweiten Ausführungsform der Koppeleinheit 50. Eine Mehrzahl von Batteriezellen 11 ist zwischen die Eingänge einer Koppeleinheit 50 in Serie geschaltet. Auch diese Ausführungsform des Batteriemoduls 60 ist nicht auf eine solche Serienschaltung von Batteriezellen 11 beschränkt, es kann wiederum auch nur eine einzelne Batteriezelle 11 vorgesehen sein oder aber eine Parallelschaltung oder gemischt-seriell-parallele Schaltung von Batteriezellen 11. Der erste Ausgang der Koppeleinheit 50 ist mit einem ersten Terminal 61 und der zweite Ausgang der Koppeleinheit 40 mit einem zweiten Terminal 62 verbunden. Das Batteriemodul 60 bietet gegenüber dem Batteriemodul 40 der Figuren 5 und 6 den Vorteil, dass die Batteriezellen 11 durch die Koppeleinheit 50 von der restlichen Batterie beidseitig abgekoppelt werden können, was einen gefahrlosen Austausch im laufenden Betrieb ermöglicht, da an keinem Pol der Batteriezellen 11 die gefährliche hohe Summenspannung der restlichen Batteriemodule der Batterie anliegt.

Figur 10 zeigt eine Ausführungsform einer Batterie, mit der das erfindungsgemäße Verfahren ausgeführt werden kann. Die Batterie weist einen Batteriemodulstrang 70 mit einer Mehrzahl von Batteriemodulen 40 oder 60 auf, wobei vorzugsweise jedes Batteriemodul 40 oder 60 dieselbe Anzahl von Batteriezellen 11 in identischer Weise verschaltet enthält. Generell kann der Batteriemodulstrang 70 jede Zahl von Batteriemodulen 40 oder 60 größer 1 enthalten. Auch können an den Polen des Batteriemodulstranges 70 zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen 11 von den Batterieanschlüssen durch die in den Batteriemodulen 40 oder 60 enthaltenen Koppeleinheiten 30 oder 50 erfolgen kann.

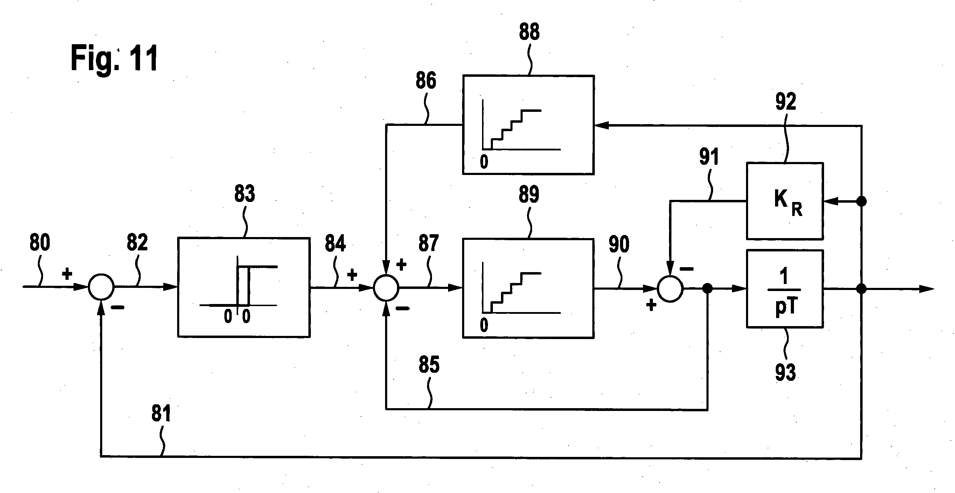

Figur 11 zeigt ein Blockdiagramm eines beispielhaften Regelsystems gemäß der Erfindung. In einem überlagerten Regelkreis wird der Sollwert der Spannung des Gleichspannungszwischenkreises mit dessen Istwert verglichen. Soll der Gleichspannungszwischenkreis voll aufgeladen, das heißt, die Spannung des Gleichspannungszwischenkreises erhöht werden, wird der Sollwert sprungartig auf den Wert der Summenspannung aller seriengeschalteten Batteriemodule gesetzt. Natürlich kann der Sollwert auch auf einen beliebigen anderen Spannungswert gesetzt werden, allerdings wird in praktischen Anwendungen der Gleichspannungszwischenkreis gewöhnlich auf den Maximalwert der Ausgangsspannung der Batterie aufgeladen. Der Zweipunktregler des überlagerten Regelkreises kommandiert daraufhin als Sollwert für einen unterlagerten Stromregelkreis, welcher als Mehrpunktregler ausgelegt ist, den Sollwert des Ladestromes so, dass der Gleichspannungszwischenkreis beispielsweise mit dem maximal zulässigen Ladestrom oder einem Ladestrom, der um eine Sicherheitsmarge unterhalb des maximale zulässigen Ladestroms liegt, aufgeladen wird. Der unterlagerte Mehrpunktregelkreis stellt den Sollwert des Ladestromes daraufhin mit der als Mehrpunktstellglied arbeitenden Batterie durch Ausgeben entsprechender Steuersignale an die Koppeleinheiten der Batteriemodule ein.

Im Detail wird eingangsseitig am Punkt 80 eine Sollbetriebsspannung für den Gleichspannungszwischenkreis vorgegeben, welche durch ein Subtrahierglied mit einer Istbetriebsspannung des Gleichspannungszwischenkreises am Punkt 81 verglichen wird und eine Spannungsdifferenz am Punkt 82 erzeugt. Die Spannungsdifferenz wird in einem Regelglied 83 einer Quantisierungsoperation unterzogen, welche die gewünschte Zweipunktregelung verwirklicht, indem die Spannungsdifferenz am Punkt 82 in einen Sollladestrom am Punkt 84 überführt wird, welcher nur zwei verschiedene Werte annehmen kann. Optional kann das Regelglied 83 auch eine Hysteresefunktion ausführen, was vorteilhaft die Schaltfrequenz des Regelsystems senkt.

Vom Sollladestrom am Punkt 84 wird in einem folgenden Subtrahierglied ein Istladestrom am Punkt 85 abgezogen. Außerdem wird in einem Regelglied 88 der Istwert der Spannung des Gleichspannungszwischenkreises in eine größte Ausgangsspannung der Batterie, welche jedoch kleiner als der Istwert der Spannung des Gleichspannungszwischenkreises ist, überführt und ein aus dieser abgeleiteter Wert in dem Subtrahierglied addiert, so dass am Punkt 88 eine Stellgröße für den Strom vorliegt, welche in einem folgenden Regelglied 89 am Punkt 90 in einen diskretisierten Stromwert für die Auswahl einer Ausgangsspannung der Batterie umgesetzt wird.

Die verbleibenden Blöcke modellieren das Verhalten des Gleichspannungszwischenkreises. Die Spannung des Gleichspannungszwischenkreises am Punkt 81 wird über ein Proportionalglied 92 mit einem Skalarfaktor K_{R} in einen Stromwert am Punkt 91 umgesetzt, welcher in einem weiteren Subtrahierglied von dem diskretisierten Stromwert am Punkt 90 subtrahiert wird und so den Iststromwert am Punkt 85 liefert. Der tatsächliche Iststromwert kann auch durch direkte Messung und Durchschnittsbildung über eine geeignete Zeitspanne bestimmt werden und am Punkt 85 in das Regelsystem einfließen. Das Regelglied 93 beschreibt die Integratoreigenschaft einer Kapazität, wie sie der Gleichspannungszwischenkreis wenigstens näherungsweise darstellt, und überführt den in den Gleichspannungszwischenkreis fließenden Strom in die Spannung des Gleichspannungszwischenkreises. Auch hier gilt, dass in der Praxis die tatsächliche Spannung des Gleichspannungszwischenkreises gewöhnlich nicht errechnet, sondern durch Messung bestimmt wird.

Alternativ kann das Regelsystem auch als Mehrpunktregelung mit Hysterese oder mit einer Mindestverweildauer in den Schaltzuständen ausgeführt werden, um die Schaltfrequenz des Stellgliedes zu begrenzen. Bevorzugt wird die Schaltzustandsänderung zeitdiskret, also synchron zu einem Takt von beispielsweise 100 kHz vorgenommen, was in einer maximalen Schaltfrequenz von 50kHz resultieren würde.

Die Erfindung beruht auf dem Gedanken, dass eine Batterie mit Koppeleinheit zum Einstellen der Ausgangsspannung der Batterie direkt als Mehrpunktstellglied für den Ladevorgang des Gleichspannungszwischenkreises genutzt werden kann. Ist beispielsweise der aktuelle Ladestrom kleiner als ein Sollwert des Ladestroms, wird die größere der beiden ausgewählten Ausgangsspannungen der Batterie eingestellt. Ist der aktuelle Ladestrom hingegen größer als sein Sollwert, wird die kleinere der beiden ausgewählten Ausgangsspannungen der Batterie eingestellt.

Das erfindungsgemäße Verfahren kann ohne besonderen zusätzlichen Aufwand mit Softwarefunktionen im Rahmen der Steuerung der Batterie realisiert werden. Für die Einbindung der Batterie als Mehrpunktstellglied in einen Regelkreis stehen hierbei die verschiedenen bekannten Mehrpunktverfahren mit ihren jeweiligen Vor- und Nachteilen zur Verfügung. Im Wesentlichen unterscheiden sich diese Verfahren hinsichtlich der maximal auftretenden Schaltfrequenz und hinsichtlich der Wechselanteile, die der Ladestrom während des Ladevorganges aufweist. Der in Figur 11 gezeigte Regelkreis ist nur ein Beispiel für ein mögliches Mehrpunktverfahren.

Die Erfindung ermöglicht es, ohne Ladevorrichtung die Spannung eines Gleichspannungszwischenkreises kontrolliert einzustellen. Dadurch kann die in einer praktischen Anwendung standardmäßig vorgesehene Ladevorrichtung entfallen, wodurch Kosten gespart und Volumen sowie Gewicht der Gesamtanordnung verringert werden.

## Patentansprüche

1. Ein Verfahren zum Einstellen einer Spannung eines Gleichspannungszwischenkreises in einem Batteriesystem mit einer Batterie und einem Antriebssystem, wobei die Batterie mit dem Antriebssystem über den Gleichspannungszwischenkreis verbunden ist und eine Anzahl von n seriengeschalteten Batteriemodulen (40, 60) aufweist, von denen jedes eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfasst und ausgebildet ist, abhängig von einem Schaltzustand der Koppeleinheit (30, 50) entweder eine Batteriemodulspannung oder eine Spannung von Null auszugeben, wobei n größer 1 ist, so dass die Batterie ausgebildet ist, eine wählbare Ausgangsspannung von n+1 verschiedenen Ausgangsspannungen auszugeben, das Verfahren wenigstens die folgenden Schritte aufweisend:
a) Bestimmen eines Istwertes der Spannung des Gleichspannungszwischenkreises;
b) Vergleichen des Istwertes der Spannung des Gleichspannungszwischenkreises mit den verschiedenen Ausgangsspannungen der Batterie;
c) Auswählen einer ersten ausgewählten Ausgangsspannung der Batterie, welche die höchste Spannung derjenigen Ausgangsspannungen der Batterie ist, welche niedriger als der Istwert der Spannung des Gleichspannungszwischenkreises sind;
d) Auswählen einer zweiten ausgewählten Ausgangsspannung der Batterie, welche die niedrigste Spannung derjenigen Ausgangsspannungen der Batterie ist, welche höher als der Istwert der Spannung des Gleichspannungszwischenkreises sind;
e) während einer ersten variablen Zeitspanne Ausgeben der ersten ausgewählten Ausgangsspannung der Batterie;
f) während einer zweiten variablen Zeitspanne Ausgeben der zweiten ausgewählten Ausgangsspannung der Batterie; und
g) Wiederholen der Schritte a) bis f), bis die Spannung des Gleichspannungszwischenkreises eine Sollbetriebsspannung erreicht.

2. Das Verfahren gemäß Anspruch 1, bei dem die Sollbetriebsspannung gleich einer maximalen der n+1 verschiedenen Ausgangsspannungen der Batterie ist.

3. Das Verfahren gemäß einem der Ansprüche 1 oder 2, bei dem der Schritt des Bestimmens des Istwertes der Spannung des Gleichspannungszwischenkreises einen Schritt des Messens der Spannung des Gleichspannungszwischenkreises enthält.

4. Das Verfahren gemäß einem der vorhergehenden Ansprüche, bei dem die erste variable Zeitspanne und die zweite variable Zeitspanne abhängig von einer Differenz zwischen der Sollbetriebsspannung und dem Istwert der Spannung des Gleichspannungszwischenkreises bestimmt werden.

5. Das Verfahren gemäß einem der vorhergehenden Ansprüche, mit einem zusätzlichen Schritt des Messens eines aktuellen Ladestroms.

6. Das Verfahren gemäß Anspruch 5, mit einem zusätzlichen Schritt des Vergleichens des gemessenen aktuellen Ladestroms mit einem maximalen zulässigen Ladestrom, wobei die Schritte e) und/oder f) beendet werden, wenn ein Betrag des aktuellen Ladestroms größer als der maximal zulässige Ladestrom ist.

7. Das Verfahren gemäß einem der Ansprüche 5 oder 6, mit einem zusätzlichen Schritt des Bestimmens eines mittleren Ladestroms und des Vergleichens des mittleren Ladestroms mit einem Sollladestrom, wobei die erste variable Zeitspanne verlängert und/oder die zweite variable Zeitspanne verkürzt wird, wenn der mittlere Ladestrom größer als der Sollladestrom ist, und/oder wobei die erste variable Zeitspanne verkürzt und/oder die zweite variable Zeitspanne verlängert wird, wenn der mittlere Ladestrom kleiner als der Sollladestrom ist.

8. Das Verfahren gemäß Anspruch 7, bei dem ein Sollladestrom konstant eingestellt wird, bis die Spannung des Gleichspannungszwischenkreises die Sollbetriebsspannung erreicht.

9. Eine Batterie mit einer Steuereinheit und einer Anzahl von n seriengeschalteten Batteriemodulen (40, 60), von denen jedes eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfasst und ausgebildet ist, abhängig von einem Schaltzustand der Koppeleinheit (30, 50) entweder eine Batteriemodulspannung oder eine Spannung von Null auszugeben, wobei n größer 1 ist, so dass die Batterie ausgebildet ist, eine wählbare Ausgangsspannung von n+1 verschiedenen Ausgangsspannungen auszugeben, **dadurch gekennzeichnet, dass**
die Steuereinheit ausgebildet ist, das Verfahren gemäß einem der vorhergehenden Ansprüche durchzuführen.

10. Ein Batteriesystem mit einer Batterie, einem mit der Batterie verbundenen Gleichspannungszwischenkreis und einem mit dem Gleichspannungszwischenkreis verbundenen Antriebssystem, **dadurch gekennzeichnet, dass**
die Batterie gemäß dem vorhergehenden Anspruch ausgebildet ist.

11. Ein Kraftfahrzeug mit einem Batteriesystem gemäß dem vorhergehenden Anspruch, wobei das Antriebssystem des Batteriesystems einen elektrischen Antriebsmotor zum Antreiben des Kraftfahrzeuges sowie einen Pulswechselrichter umfasst.

## Claims

1. Method for adjusting a voltage of a DC voltage intermediate circuit in a battery system having a battery and a drive system, wherein the battery is connected to the drive system by way of the DC voltage intermediate circuit and comprises a number of n series-connected battery modules (40, 60), each of which battery modules comprises a coupling unit (30, 50) and at least one battery cell (11) that is connected between a first input (31, 51) and a second input (32, 52) of the coupling unit (30, 50) and is embodied to provide either a battery module voltage or a voltage of zero in dependence upon a switching state of the coupling unit (30, 50), wherein n is greater than 1 so that the battery is embodied to provide an output voltage that can be selected from n+1 different output voltages, said method comprising at least the following steps:
a) Determine the instantaneous value of the voltage of the DC voltage intermediate circuit;
b) Compare the instantaneous value of the voltage of the DC voltage intermediate circuit with the different output voltages of the battery;
c) Select a first selected output voltage of the battery that is the highest voltage of those output voltages of the battery that are lower than the instantaneous value of the voltage of the DC voltage intermediate circuit;
d) Select a second selected output voltage of the battery that is the lowest voltage of those output voltages of the battery that are higher than the instantaneous value of the voltage of the DC voltage intermediate circuit;
e) During a first variable period of time provide the first selected output voltage of the battery;
f) During a second variable period of time provide the second selected output voltage of the battery; and
g) Repeat the steps a) to f) until the voltage of the DC voltage intermediate circuit achieves a desired operating voltage.

2. Method according to Claim 1, wherein the desired operating voltage is equal to a maximum of the n+1 different output voltages of the battery.

3. Method according to either of Claims 1 and 2, wherein the step of determining the instantaneous value of the voltage of the DC voltage intermediate circuit comprises a step of measuring the voltage of the DC voltage intermediate circuit.

4. Method according to any one of the preceding claims, wherein the first variable period of time and the second variable period of time are determined in dependence upon a difference between the desired operating voltage and the instantaneous value of the voltage of the DC voltage intermediate circuit.

5. Method according to any one of the preceding claims having an additional step of measuring a prevailing charging current.

6. Method according to Claim 5 having an additional step of comparing the measured prevailing charging current with a maximum permissible charging current, wherein the steps e) and/or f) are terminated if the magnitude of the prevailing charging current is greater than the maximum permissible charging current.

7. Method according to either of Claims 5 and 6 having an additional step of determining an average charging current and of comparing the average charging current with a desired charging current, wherein the first variable period of time is extended and/or the second variable period of time is reduced if the average charging current is greater than the desired charging current, and/or wherein the first variable period of time is reduced and/or the second variable period of time is increased if the average charging current is lower than the desired charging current.

8. Method according to Claim 7, wherein a desired charging current is maintained at a constant value until the voltage of the DC voltage intermediate circuit achieves the desired operating voltage.

9. Battery having a control unit and a number of n series-connected battery modules (40, 60), each of which battery modules comprises a coupling unit (30, 50) and at least one battery cell (11) that is connected between a first input (31, 51) and a second input (32, 52) of the coupling unit (30, 50) and is embodied to provide either a battery module voltage or a voltage of zero in dependence upon a switching state of the coupling unit (30, 50), wherein n is greater than 1 so that the battery is embodied to provide an output voltage that can be selected from n+1 different output voltages, **characterized in that** the control unit is embodied to perform the method according to any one of the preceding claims.

10. Battery system having a battery, a DC voltage intermediate circuit that is connected to the battery, and a drive system that is connected to the DC voltage intermediate circuit, **characterized in that** the battery is embodied according to the preceding claim.

11. Motor vehicle having a battery system according to the preceding claim, wherein the drive system of the battery system comprises an electric drive motor for driving the motor vehicle and a pulse-controlled inverter.

## Revendications

1. Procédé de réglage de la tension d'un circuit intermédiaire de tension continue dans un système de batterie avec une batterie et un système d'entraînement, la batterie étant connectée au système d'entraînement par le biais du circuit intermédiaire de tension continue et présentant un nombre n de modules de batterie montés en série (40, 60), chacun d'entre eux comprenant une unité d'accouplement (30, 50) et au moins une cellule de batterie (11) montée entre une première entrée (31, 51) et une deuxième entrée (32, 52) de l'unité d'accouplement (30, 50) et étant réalisé, en fonction d'un état de branchement de l'unité d'accouplement (30, 50), de manière à fournir une tension de module de batterie ou une tension nulle, n étant supérieur à 1, de sorte que la batterie soit réalisée pour fournir une tension de sortie sélectionnable de n+1 différentes tensions de sortie, le procédé présentant au moins les étapes suivantes :
a) détermination de la valeur instantanée de la tension du circuit intermédiaire de tension continue ;
b) comparaison de la valeur instantanée de la tension du circuit intermédiaire de tension continue avec les différentes tensions de sortie de la batterie ;
c) sélection d'une première tension de sortie sélectionnée de la batterie, laquelle est la plus haute tension parmi les tensions de sortie de la batterie qui sont inférieures à la valeur instantanée de la tension du circuit intermédiaire de tension continue ;
d) sélection d'une deuxième tension de sortie sélectionnée de la batterie qui est la tension la plus basse parmi les tensions de sortie de la batterie qui sont supérieures à la valeur instantanée de la tension du circuit intermédiaire de tension continue ;
e) fourniture de la première tension de sortie sélectionnée de la batterie pendant un premier intervalle de temps variable ;
f) fourniture de la deuxième tension de sortie sélectionnée de la batterie pendant un deuxième intervalle de temps variable ; et
g) répétition des étapes a) à f) jusqu'à ce que la tension du circuit intermédiaire de tension continue atteigne une tension de service de consigne.

2. Procédé selon la revendication 1, dans lequel la tension de service de consigne est égale à une tension maximale des n+1 différentes tensions de sortie de la batterie.

3. Procédé selon l'une quelconque des revendications 1 ou 2, dans lequel l'étape de détermination de la valeur instantanée de la tension du circuit intermédiaire de tension continue contient une étape de mesure de la tension du circuit intermédiaire de tension continue.

4. Procédé selon l'une quelconque des revendications précédentes, dans lequel le premier intervalle de temps variable et le deuxième intervalle de temps variable sont déterminés en fonction d'une différence entre la tension de service de consigne et la valeur instantanée de la tension du circuit intermédiaire de tension continue.

5. Procédé selon l'une quelconque des revendications précédentes, comprenant une étape supplémentaire de mesure d'un courant de charge actuel.

6. Procédé selon la revendication 5, comprenant une étape supplémentaire de comparaison du courant de charge actuel mesuré avec un courant de charge admissible maximal, les étapes e) et/ou f) étant terminées lorsqu'une valeur du courant de charge actuel est supérieure au courant de charge maximal admissible.

7. Procédé selon l'une quelconque des revendications 5 ou 6, comprenant une étape supplémentaire de détermination d'un courant de charge moyen et de comparaison du courant de charge moyen avec un courant de charge de consigne, le premier intervalle de temps variable étant prolongé et/ou le deuxième intervalle de temps variable étant raccourci lorsque le courant de charge moyen est supérieur au courant de charge de consigne, et/ou le premier intervalle de temps variable étant raccourci et/ou le deuxième intervalle de temps variable étant prolongé lorsque le courant de charge moyen est inférieur au courant de charge de consigne.

8. Procédé selon la revendication 7, dans lequel un courant de charge de consigne est ajusté en permanence, jusqu'à ce que la tension du circuit intermédiaire de tension continue atteigne la tension de service de consigne.

9. Batterie comprenant une unité de commande et un nombre n de modules de batterie montés en série (40, 60), chacun d'entre eux comprenant une unité d'accouplement (30, 50) et au moins une cellule de batterie (11) montée entre une première entrée (31, 51) et une deuxième entrée (32, 52) de l'unité d'accouplement (30, 50) et étant réalisé, en fonction d'un état de branchement de l'unité d'accouplement (30, 50), de manière à fournir une tension de module de batterie ou une tension nulle, n étant supérieur à 1, de sorte que la batterie soit réalisée pour fournir une tension de sortie sélectionnable de n+1 différentes tensions de sortie, **caractérisée en ce que**
l'unité de commande est réalisée pour mettre en oeuvre le procédé selon l'une quelconque des revendications précédentes.

10. Système de batterie comprenant une batterie, un circuit intermédiaire de tension continue connecté à la batterie et un système d'entraînement connecté au circuit intermédiaire de tension continue, **caractérisé en ce que**
la batterie est réalisée selon la revendication précédente.

11. Véhicule automobile comprenant un système de batterie selon la revendication précédente, le système d'entraînement du système de batterie comprenant un moteur d'entraînement électrique pour entraîner le véhicule automobile ainsi qu'un onduleur à impulsions.
